# EUROPÄISCHE PATENTSCHRIFT

(11) **EP 3 499 476 B1**
(45) Veröffentlichungstag und Bekanntmachung des Hinweises auf die Patenterteilung: **07.02.2024**
(21) Anmeldenummer: 18211820.8
(22) Anmeldetag: 12.12.2018
(51) Int. Cl.: G08B 21/02, G08B 21/16

(54) **GASMESSVORRICHTUNG**
GAS MEASURING DEVICE
DISPOSITIF DE MESURE DES GAZ

(30) Priorität: 18.12.2017 DE 102017011683
(43) Veröffentlichungstag der Anmeldung: 19.06.2019
(73) Patentinhaber: Dräger Safety AG & Co. KGaA, 23560 Lübeck (DE)
(72) Erfinder: Ostermann, Ulf, 23843 Rümpel (DE); Fornasiero, Livio, 23847 Bliestorf (DE); Harnack, Oliver, 23562 Lübeck (DE); Schöch, Winfried, 23562 Lübeck (DE); Traving, Wulf-Gerd, 23701 Eutin (DE)
(74) Vertreter: Guthöhrlein, Gerhard

(56) Entgegenhaltungen:
- DE-A1-102006 034 857
- DE-U1-202008 005 467
- US-A1- 2016 133 108
- US-B1- 9 652 975

## Beschreibung

Auf chemischen und petrochemischen Anlagen müssen regelmäßig Wartungs- und Reparaturarbeiten durchgeführt werden. Personen, welche vor Ort die Arbeiten leisten, sind im Falle von Lecks bzw. einer Havarie durch austretende Gase und Dämpfe akut gefährdet. Neben weiterer Schutzausrüstung führen Arbeiter daher in der Regel Gasmessgeräte mit sich, die bei Auftreten erhöhter Gaskonzentrationen einen akustischen Alarm geben. Zusätzliche Sicherheit liefern stationäre oder vorübergehend montierte, semistationäre Gasmessgeräte. Bei Alarmen werden die betroffenen Anlagenteile evakuiert. Bei großen Havarien kann es allerdings geschehen, dass eine Evakuierung nicht rechtzeitig gelingt und Arbeiter durch Vergiftung oder andere Einwirkungen bewegungsunfähig werden.

Rettungskräfte stehen dann vor der Aufgabe, möglichst schnell einen Überblick über die Lage zu gewinnen und ggf. verunfallte Personen zu finden. Da Industrieanlagen allerdings oft sehr komplex und unübersichtlich gestaltet sind, kann dies erhebliche Zeit in Anspruch nehmen und Hilfe die Verunfallten nur mit entsprechender Verzögerung erreichen.

Auf eine effiziente Weise eine zügige Gewinnung einer Lageübersicht und das schnelle Finden von Personen wie z.B. Arbeitern oder Unfallopfern zu ermöglichen, ist das Ziel der Erfindung.

Aufgabe der vorliegenden Erfindung ist es daher, eine Gasmessvorrichtung bereitzustellen, welche nicht nur ausgebildet ist, um bezogen auf möglicherweise schädliche Gase einen potentiellen Gefährdungszustand zu detektieren, sondern ebenso in der Lage ist, eine Lokalisierung von Personen im Havariefall bzw. im Gefährdungszustand zu unterstützen.

Bekannt sind unterschiedliche Verfahren bzw. Systeme zur Lokalisierung von Arbeitern auf Industrieanlagen bzw. Raffinerien.

Einsatzlage-Informationssysteme auf Industrieanlagen beziehen heute meist nur die Daten stationärer Sensorik automatisiert ein. Daten portabler Geräte werden nicht automatisiert berücksichtigt. Eine Ortung von Arbeitern findet gewöhnlich nicht statt. Aus diesen Gründen bedarf es im Falle von Havarien in komplexen Einsatzlagen sehr umfangreicher mündlicher Kommunikation zwischen allen Beteiligten, um ein Lagebild zu erhalten. Unter diesen Umständen kann es teilweise Stunden dauern bis der Verbleib aller Arbeiter geklärt ist.

Ortungssysteme im industriellen Bereich basieren auf Sendern und Empfängern von Funksignalen. Entweder trägt die zu ortende Person einen Sender bei sich und wird von mehreren stationären Empfängern geortet, oder die Person trägt einen Empfänger, der die Signale mehrerer Sender bekannter Position erfasst. Die Berechnung des Ortes erfolgt dann beispielsweise über eine Messung von Laufzeitunterschieden übertragener Signale.

Ein allgemein bekanntes Ortungssystem ist GPS (Global Positioning System), wobei die Person einen Empfänger trägt, der Satellitendaten empfängt. Während die Ortung über GPS im Freien meist verlässlich funktioniert, ist sie in Gebäuden oder in Bereichen mit umfangreichen Metallinstallationen wegen der dort gegebenen Abschirmung bzw. Reflexion der Funksignale stark gestört und führt unter diesen Gegebenheiten zu keinen oder möglicherweise zu grob falschen Standortberechnungen.

Andere Lösungen sind in industriellen Bereichen sogenannte Indoor-Lokalisierungssysteme. Diese erfordern eine Installation einer entsprechenden Infrastruktur von Sendern oder Empfänger, was allerdings in großen industriellen Anlagen mitunter zu hohen Installations- und Wartungskosten führt.

Weiterhin erlauben bekannte Systeme potentiell eine umfassende Leistungs- und Verhaltenskontrolle einer georteten Person. Eine Anschaffung solch einer Anlage kann in einem Arbeitsumfeld daher einer Mitsprache von Arbeitnehmervertretungen unterliegen.

Aus diesen Gründen haben sich Personenortungsanlagen in chemischen und petrochemischen Industrieanlagen bisher nicht in der Breite durchgesetzt. Nach aktuellem Stand werden Arbeiter bei gefährlichen Tätigkeiten durch weitere Personen, sogenannten Sicherungsposten, abgesichert.

Insbesondere sind aus dem Stand der Technik weitere Quellen bekannt, welche im Zusammenhang mit einer Lokalisierung von Personen bzw. Arbeitern unterschiedliche Lösungen vorschlagen. Diese Quellen sind:
- Video über die Installation eines Personenortungssystems auf einer Raffinerie der Marathon Petroleum Corporation in Robinson, Ilinois: https://www.accenture.com/us-en/success-marathon-teamed-acn-protects-employees-summary-video
- https://www.accenture.com/us-en/-/media/Accenture/Conversion-Assets/DotCom/Documents/Global/PDF/Industries_8/Accenture-Marathon-Team ing-Protect-Em ployees.pdf
- AU 2015202280 "System and method for voice based personalized interactive evacuation guidance"
- US 2015 0248824 A1 "System and method for location tagged headcount accounting"
- US 7640026 B2 "Location of radio-frequency transceivers"
- US 2015010296 A1 "System and method to monitor events and personal locations"
- "Meldeverfahren am Notfallsammelplatz", https-//www.bgrci-foerderpreis.de/ foerderpreis/beitrag.aspx?nr=1860
- US 9 652 975 "Integrated building occupant protection system for persons and pets"

Die erfindungsgemäße Aufgabe wird gelöst durch eine Gasmessvorrichtung nach dem Patentanspruch 1.

Vorteilhafte Ausführungsformen der Erfindung sind Gegenstand der abhängigen Ansprüche und werden in der folgenden Beschreibung unter teilweiser Bezugnahme auf die Figuren näher erläutert.

Die erfindungsgemäße Gasmessvorrichtung ist durch den Gegensand von Anspruch 1 definiert.

Die erfindungsgemäße Gasmessvorrichtung zeichnet sich dadurch aus, dass sie zum einen, wie aus dem Stand der Technik bekannt, aus Sensordaten eines Gassensormoduls einen potentiellen Gefährdungszustand detektieren kann, und ferner, wie erfindungsgemäß vorgeschlagen, dann bei Vorliegen des potentiellen Gefährdungszustandes bzw. Detektion dessen in einen zweiten Betriebszustand wechseln kann, in welchem eine hinreichende räumliche Nähe tragbarer Sendeeinheiten zu der Gasmessvorrichtung festgestellt werden kann, sodass durch Bereitstellung dieser Information bzw. der Kennungen der in hinreichender Nähe befindlicher Sendeeinheiten ein System oder ein Nutzer dann darauf schließen kann, an welchem Ort bzw. in welcher Nähe zu der Gasmessvorrichtung sich die tragbaren Sendeeinheiten befinden. Solche tragbaren Sendeeinheiten können dann also im Anwendungsfall von Personen bzw. Arbeitern getragen werden, beispielsweise an der Kleidung, sodass in einem Havariefall bzw. Gefährdungszustand die Gasmessvorrichtung automatisiert eine Information darüber bereitstellen kann, welche Sendereinheiten sich in der Nähe der Gasmessvorrichtung befinden. Durch Bereitstellen solcher Informationen kann dann beispielsweise in einer Zentrale darauf geschlossen werden, an welchen Orten sich jeweilige Arbeiter bzw. jeweilige Personen befinden. Werden beispielsweise im Anwendungsfall unterschiedliche Gasmessvorrichtungen der erfindungsgemäßen Art an sogenannten Sammelplätzen, welche zum Aufsuchen von Personen im Havarie bzw. Gefährdungsfall vorgesehen sind, aufgestellt, so kann dann in der Zentrale festgestellt werden, ob planmäßig in der Anlage bzw. Raffinerie befindlichen Personen sich an solchen jeweiligen Sammelplätzen befinden.

Dadurch, dass die erfindungsgemäße Gasmessvorrichtung erst in dem zweiten Betriebszustand die Funksignale der Sendeeinheiten erfasst und dann auf eine hinreichende räumliche Nähe der Sendeeinheiten zu der Gasmessvorrichtung schließt und eine solche Information erst in dem zweiten Betriebszustand bereitstellt, kann vorzugsweise ein Sparen von Energie bzw. elektrischer Energie durch die Gasmessvorrichtung ermöglicht werden. Denn vorzugsweise wird eben erst dann von dem ersten in den zweiten Betriebszustand gewechselt, wenn auf Basis der Sensordaten des Gassensormoduls der Gefährdungszustand detektiert wurde, so dass eben vorzugsweise während des ersten Betriebszustandes keine Auswertung von Funksignalen erfolgen muss.

Die erfindungsgemäße Gasmessvorrichtung ist derart ausgestaltet, dass die Gasmessvorrichtung ferner eine Audioerfassungseinheit und/oder eine Bilderfassungseinheit aufweist, wobei die Kontrolleinheit ferner ausgebildet ist, bei Vorliegen des zweiten Betriebszustandes mittels der Audioerfassungseinheit Audiodaten und/oder mittels der Bilderfassungseinheit Bilddaten bezogen auf ein räumliches Umfeld zu erfassen und über die zweite Funksendeeinheit als zusätzliche Information gegenüber Kennungen der Sendeeinheit bereitzustellen.

Eine bevorzugte Ausführungsform der erfindungsgemäßen Gasmessvorrichtung ist derart ausgestaltet, dass die jeweiligen Funksignale jeweilige Sendeleistungen indizieren, mit welchen die jeweiligen Funksignale ausgesendet wurden, und wobei die Kontrolleinheit ferner ausgebildet ist, auf Basis der indizierten Sendeleistungen festzustellen, welche der Sendeeinheiten eine hinreichende räumliche Nähe zu der Gasmessvorrichtung aufweisen.

Eine bevorzugte Ausführungsform der erfindungsgemäßen Gasmessvorrichtung ist derart ausgestaltet, dass die Kontrolleinheit ferner ausgebildet ist, in dem ersten Betriebszustand mittels der Funkempfangseinheit ein oder mehrere Funksignale, welche jeweilige Kennungen tragbarer Sendeeinheiten indizieren, mit einer ersten Erfassungsrate zu erfassen, sowie in dem zweiten Betriebszustand mittels der Funkempfangseinheit ein oder mehrere Funksignale, welche jeweilige Kennungen tragbarer Sendeeinheiten indizieren, mit einer zweiten Erfassungsrate zu erfassen, wobei die zweite Erfassungsrate vorzugsweise höher ist als die erste Erfassungsrate.

Eine bevorzugte Ausführungsform der erfindungsgemäßen Gasmessvorrichtung ist derart ausgestaltet, dass die Gasmessvorrichtung ferner ein Datenmodul zum Empfangen von Datennachrichten aufweist, wobei die Kontrolleinheit ferner ausgebildet ist, mittels des Datenmoduls ein oder mehrere Datennachrichten zu empfangen, welche weitere Sensordaten eines weiteren, externen Gassensormoduls indizieren, und auf Basis der weiteren Sensordaten den potentiellen Gefährdungszustand zu detektieren.

Eine bevorzugte Ausführungsform der erfindungsgemäßen Gasmessvorrichtung ist derart ausgestaltet, dass die Gasmessvorrichtung ferner ein Datenmodul zum Empfangen von Datennachrichten aufweist, wobei die Kontrolleinheit ferner ausgebildet ist, mittels des Datenmoduls wenigstens eine Alarmnachricht zu empfangen, welche ein mögliches Vorliegen eines Gefährdungszustandes indiziert, und auf Basis der Alarmnachricht den potentiellen Gefährdungszustand zu detektieren.

Eine bevorzugte Ausführungsform der erfindungsgemäßen Gasmessvorrichtung ist derart ausgestaltet, dass die Gasmessvorrichtung ferner eine Schnittstelle zu einer Audioerfassungseinheit aufweist, wobei die Kontrolleinheit ferner ausgebildet ist, mittels der Schnittstelle Audiodaten zu erfassen, auf Basis der Audiodaten ein Vorliegen eines vorbestimmten akustischen Signals zu detektieren und bei Vorliegen des vorbestimmten akustischen Signals den potentiellen Gefährdungszustand zu detektieren.

Eine bevorzugte Ausführungsform der erfindungsgemäßen Gasmessvorrichtung ist derart ausgestaltet, dass die Gasmessvorrichtung ferner ein Datenmodul zum Empfangen von Datennachrichten aufweist, wobei die Kontrolleinheit ferner ausgebildet ist, in dem zweiten Betriebszustand mittels des Datenmoduls eine Quittierungsnachricht zu empfangen und bei Vorliegen der Quittierungsnachricht den zweiten Betriebszustand zu beenden.

Eine bevorzugte Ausführungsform der erfindungsgemäßen Gasmessvorrichtung ist derart ausgestaltet, dass die Gasmessvorrichtung ferner eine Eingabeeinheit zum Entgegennehmen einer vorbestimmten Nutzereingabe aufweist, wobei die Kontrolleinheit ferner ausgebildet ist, in dem zweiten Betriebszustand bei Vorliegen der vorbestimmten Nutzereingabe den zweiten Betriebszustand zu beenden.

Im Folgenden wird die Erfindung anhand spezieller Ausführungsformen ohne Beschränkung des allgemeinen Erfindungsgedankens anhand der Figuren näher erläutert.

Dabei zeigen:
- Figur 1: eine bevorzugte Ausführungsform der erfindungsgemäßen Vorrichtung.
- Figur 2: Verfahrensschritte, welche die Funktionsweise der erfindungsgemäßen Vorrichtung illustrieren,
- Figur 3: Teilverfahrensschritte zur Auswertung empfangener Funksignale,
- Figur 4: eine Systemübersicht eines Systems, in welchem die erfindungsgemäße Vorrichtung verwendet werden kann,
- Figur 5: bevorzugte Verfahrensschritte zur Durchführung durch eine bevorzugte Ausführungsform der erfindungsgemäßen Vorrichtung,
- Figur 6: weitere bevorzugte Verfahrensschritte zur Detektion eines Gefährdungszustandes durch die erfindungsgemäße Vorrichtung,
- Figur 7: ein Ablaufdiagramm zur Beschreibung eines Szenarios, in welchem die erfindungsgemäße Vorrichtung zur Anwendung kommen kann.

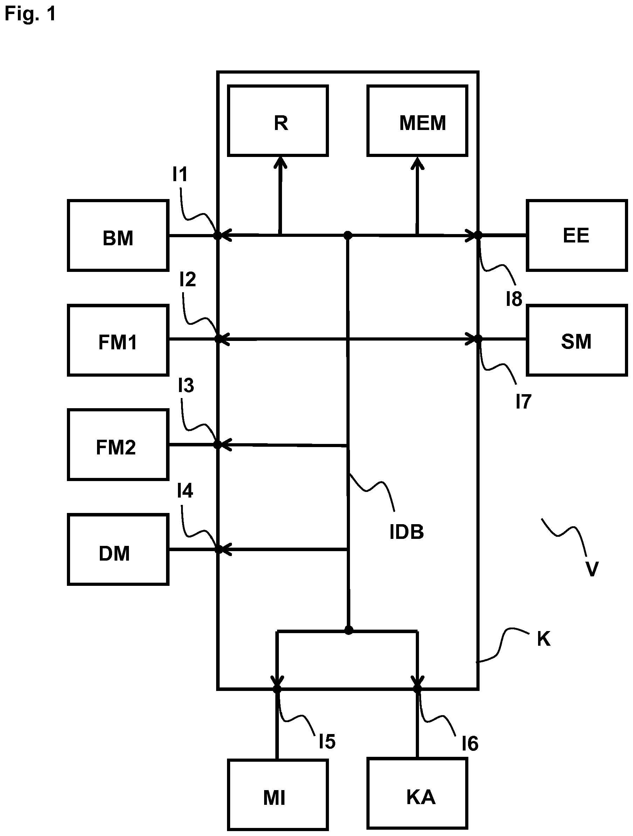

Figur 1 zeigt eine bevorzugte Ausführungsform der erfindungsgemäßen Vorrichtung bzw. Gasmessvorrichtung V.

Die Gasmessvorrichtung V weist eine Kontrolleinheit K auf, welche vorzugsweise eine Recheneinheit R sowie eine Speichereinheit MEM aufweist.

Die Kontrolleinheit K weist eine Schnittstelle I1 zu einer Funkempfangseinheit BM auf, welche vorzugsweise eine sogenannte Bluetooth-Low-Energy (BLE) Einheit bzw. ein Bluetooth-Low-Energy Empfänger ist.

Ferner weist die Kontrolleinheit K eine Schnittstelle I2 zu einer Funksendeeinheit FM1 auf.

Ferner weist die Kontrolleinheit K eine Schnittstelle I3 zu einer zweiten Funksendeeinheit FM2 auf.

Die Kontrolleinheit K weist ferner eine Schnittstelle I7 zu einem Gassensormoduls SM auf.

Vorzugsweise weist die Kontrolleinheit K eine Schnittstelle I4 zu einem Datenkommunikationsmodule bzw. Datenmodul DM auf.

Das Datenmodul DM ermöglicht eine Datenkommunikation in kabelgebundener oder kabelloser Weise, wobei eine kabellose Datenkommunikation in Form einer Funktechnologie implementiert sein kann.

Die Kontrolleinheit K weist ferner vorzugsweise eine Schnittstelle I5 zu einer Audioerfassungseinheit MI, vorzugsweise in Form eines Mikrofons, auf. Ferner weist die Kontrolleinheit K vorzugsweise eine Schnittstelle I zu einer Bilderfassungseinheit KA, vorzugsweise in Form einer Kamera, auf.

Ferner weist die Kontrolleinheit K vorzugsweise eine Schnittstelle I8 zu einer Eingabeeinheit EE auf. Die Eingabeeinheit kann ein Knopf, ein Touch Screen oder eine andere ähnliche Eingabeeinheit zur Entgegennahme eines Eingabesignals eines Nutzers sein.

Die Schnittstellen I1, ..., I8 können jeweils kabelgebundene oder kabellose Schnittstellen sein.

Vorzugsweise sind die Schnittstellen I1, ..., I8 über einen internen Datenbus IDB mit der Recheneinheit R und/oder einer Speichereinheit MEM der Kontrolleinheit K verbunden.

Vorzugsweise weist die erste Funksendeeinheit FM1 eine geringere Leistungsaufnahme als die zweite Funksendeeinheit FM2 auf.

Vorzugsweise weist die erste Funksendeeinheit FM1 eine geringere Datenrate als die zweite Funksendeeinheit FM2 auf.

Vorzugsweise handelt es sich bei der ersten Funksendeeinheit FM1 um eine Funksendeeinheit nach dem LoRa Standard, dem Sigfox Standard, dem LTE-M Standard oder dem Standard NB-IoT.

Vorzugsweise handelt es sich bei der zweiten Funksendeeinheit FM2 um eine Funksendeeinheit nach dem WLAN Standard oder dem LTE Standard oder einem anderen Mobilfunkstandard.

Vorzugsweise handelt es sich bei dem Datenmodul DM um ein Datenmodul für eine Datenkommunikation in kabelloser Weise nach dem WLAN Standard oder dem LTE Standard. Vorzugweise handelt es sich bei dem Datenmodul DM um ein Datenmodul für eine Datenkommunikation in kabelgebundener Weise nach dem WLAN Standard unter einem anderen Internetprotokoll.

Die Funkempfangseinheit BM ist vorzugsweise ausgebildet nach dem Standard gemäß der *Bluetooth Core Specification V5.0, Covered Core Package Version: 5.0, Publication date December 06, 2016* ausgebildet.

Die wesentliche Idee der Erfindung besteht darin, dass die erfindungsgemäße Vorrichtung nach Detektion des Gefährdungszustandes in einen zweiten Betriebszustand wechseln kann, in welchem die Funkempfangseinheit BM, vorzugsweise als BLE-Modul, Signale, vorzugsweise in Form von sogenannten BLE-Beacons, von tragbaren Sendeeinheiten empfangen kann. Solche tragbaren Sendeeinheiten können Personen bzw. Arbeiter dann an der jeweiligen Kleidung tragen. Die Funkempfangseinheit BM ist dann beispielsweise ein sogenannter Bluetooth-Low-Energy Scanner.

Die erfindungsgemäße Vorrichtung V mit einer solchen Empfangseinheit BM kann dann vorzugsweise fest an Orten aufgestellt werden, welche in einem Evakuierungsfall bedeutsam sein könnten. Solche Orte können sogenannte Sammelplätze sein.

Vorzugsweise kann der Ort, an dem die Vorrichtung V aufgestellt wird, aber auch ein Ort sein, an welchem potenziell gefährliche Arbeiten durch Arbeiter durchgeführt werden. Kommt es dann zu einer Detektion des Gefährdungsfalles, so kann der erfindungsgemäße Vorrichtung V in dem zweiten Betriebszustand dann feststellen, welche Sendeeinheiten bzw. eben welche dazugehörigen Arbeiter sich in der Nähe der Vorrichtung V befinden und diese Information an eine Zentrale weiterleiten. Die Zentrale kann dann beispielsweise darauf schließen, welche Personen sich in der Nähe der Vorrichtung V und damit innerhalb eines Gefährdungsumfeldes befinden.

Bei einem Funksignal kann es sich um sogenanntes BLE-Beacon-Signal handeln, welches regelmäßig bzw. periodisch von einer solchen Sendeeinheit bzw. tragbaren Sendeeinheiten ausgesendet wird.

In einem Funksignal wie beispielsweise einem BLE-Beacon-Signal wird vorzugweise unter anderem auch eine Sendestärke codiert übertragen bzw. durch das Funksignal indiziert. Hierdurch wird es ermöglicht, aus einem Funksignal die Sendestärke am Ort des Senders auszulesen und unter Berücksichtigung einer festgestellten Empfangsstärke des Funksignals in der Empfangseinheit BM sowie der in dem Funksignal indizierten Sendestärke darauf zu schließen, wie groß ein Abstand zwischen der Vorrichtung V und der Sendeeinheit, welche das Funksignal ausgesendet hat, ist. Hierdurch kann dann darauf geschlossen werden, ob eine Sendeeinheit, welche das Funksignal ausgesendet hat, sich in einer hinreichenden Nähe zu der Vorrichtung V befindet.

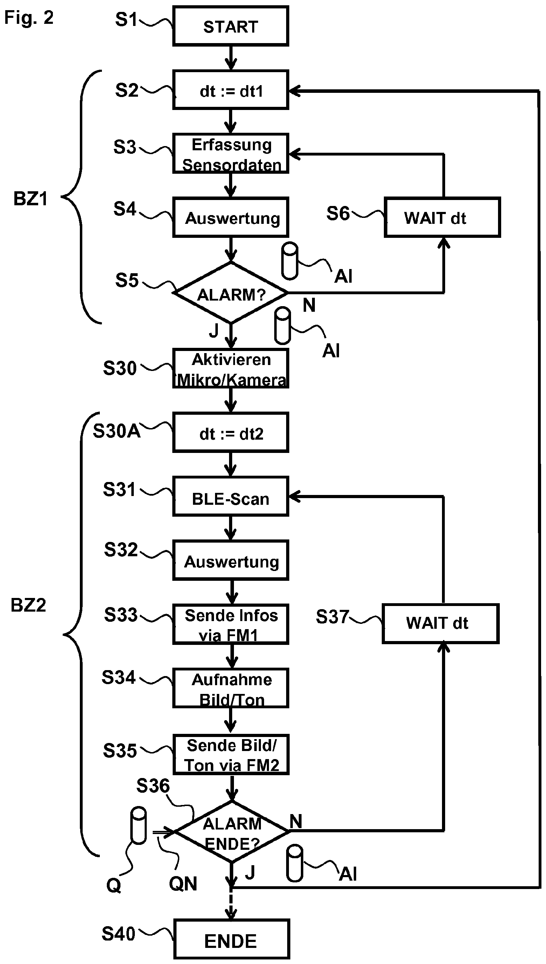

Die Figur 2 zeigt Verfahrensschritte, welche durch die erfindungsgemäße Vorrichtung ausgeführt werden können.

Hierbei handelt es sich um Verfahrensschritte, welche sich im Wesentlichen auf die Funktionsweise der Kontrolleinheit K beziehen.

In einem ersten Verfahrensschritt S1 beginnt das Verfahren.

In einem zweiten Verfahrensschritt S2 wird ein Zeitintervall dt auf einen Vorgabewert dt1 gesetzt, welcher vorzugsweise in einer Speichereinheit MEM aus der Figur 1 abgespeichert ist.

In einem dritten Verfahrensschritt S3 werden Sensordaten des Gassensormoduls SM aus der Figur 1 erfasst.

In einem Verfahrensschritt S4 erfolgt dann eine Auswertung dieser Sensordaten. Vorzugsweise werden hier ein Maximalwert, ein Mittelwert, ein Medianwert und/oder andere aus den Rohsensordaten abgeleitete Werte ermittelt. Auf Basis der Rohsensordaten oder der daraus abgeleiteten Werte wird dann auf einem potentiellen Gefährdungszustand in dem Umfeld der Vorrichtung V geschlossen bzw. der potentielle Gefährdungszustand detektiert. Ziel ist es also, in dem ersten Betriebszustand BZ1 einen potentiellen Gefährdungszustand in dem Umfeld der Vorrichtung V zu detektieren.

Es wird beispielsweise dann der potentielle Betriebszustand detektiert, wenn die Rohsensordaten oder ein daraus abgeleiteter Wert einen vorgegebenen Schwellenwert einmalig oder während eines vorgegebenen Zeitfensters dauerhaft überschreiten.

Es wird dann also in dem Verfahrensschritt S4 eine Alarminformation AI erstellt, welche indiziert, ob der potentielle Gefährdungszustand detektiert wurde. Beispielsweise kann die Alarminformation AI den Wert 0 annehmen, um zu indizieren, dass kein Gefährdungszustand detektiert wurde oder eben den Wert 1 annehmen, um zu indizieren, dass der potentielle Gefährdungszustand detektiert wurde.

Diese Alarminformation AI wird dann an einen Verfahrensschritt S5 weitergegeben. In dem Verfahrensschritt S5 wird dann entschieden, ob der Alarmierungsfall bzw. der potentielle Gefährdungszustand vorliegt.

Ist dies nicht der Fall, sodass also die Alarminformation AI den Wert 0 annimmt, so wird zu einem Schritt S6 innerhalb des Betriebszustandes BZ1 verzweigt, in welchem für das Zeitintervall dt gewartet wird. Nach Abwarten für das Zeitintervall dt wird von dem Verfahrensschritt S6 zu dem Verfahrensschritt S3 zurückkehrt.

Wurde der potentielle Gefährdungszustand detektiert, sodass also die Alarminformation den Wert 1 angenommen hat, so wird weiter verzweigt zu Verfahrensschritten innerhalb des zweiten Betriebszustandes BZ2 bzw. es wird dann also in den zweiten Betriebszustand BZ2 gewechselt.

In einem dann folgenden Verfahrensschritt S30 wird vorzugsweise die Audioerfassungseinheit MI aus der Figur 1 aktiviert. Ferner wird vorzugsweise die in der Figur 1 beschriebene Bilderfassungseinheit KA aktiviert.

In dem Verfahrensschritt S30A wird das Zeitintervall zum Warten dt auf einen anderen Wert dt2 gesetzt. Der Zeitwert dt2 ist vorzugsweise kleiner als der Zeitwert dt1. In dem Verfahrensschritt S31 erfolgt dann ein Empfangen von Funksignalen tragbarer Sendeeinheiten. Dieses kann auch als ein sogenannter BLE-Scan beschrieben werden. Die im Rahmen des Verfahrensschrittes S31 empfangenen jeweiligen Funksignale indizieren jeweilige Kennungen jeweiliger tragbarer Sendeeinheiten.

Nach der Erfassung der Funksignale in dem Verfahrensschritt S31 erfolgt dann in dem Verfahrensschritt S32 eine Auswertung der Funksignale.

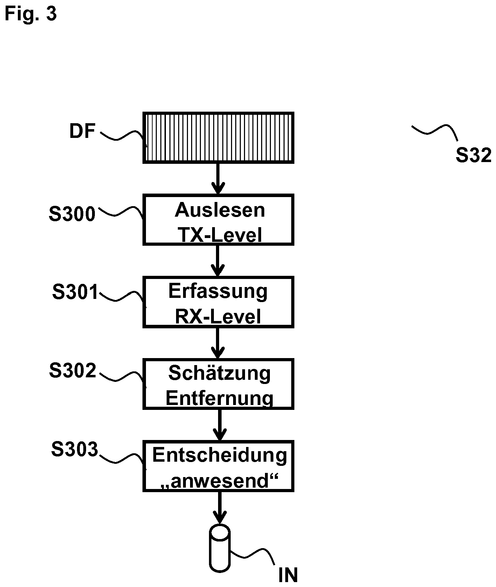

Dieses wird ferner im Detail noch unter Bezug auf die Figur 3 beschrieben.

In dem Verfahrensschritt S32 wird auf Basis der Funksignale festgestellt, welche der dazugehörigen Sendeeinheiten eine hinreichende räumliche Nähe zu der Gasmessvorrichtung V aus Figur 1 aufweisen.

In den Verfahrensschritt S33 erfolgt dann ein Versenden der Kennungen jener Sendeeinheiten, für welche eine hinreichende räumliche Nähe zu der Gasmessvorrichtung festgestellt wurde. Dieses Versenden der Kennungen kann auch als ein Bereitstellen dieser Kennungen angesehen werden. Vorzugsweise wird in dem Verfahrensschritt S32 eine Entfernung einer Sendeeinheit auf Basis des entsprechenden Funksignals der Sendeeinheit zu der Gasmessvorrichtung bestimmt. Vorzugsweise werden dann solche Entfernungsinformationen bezogen auf die jeweiligen Sendeeinheiten im Rahmen des Verfahrensschrittes S33 bereitgestellt.

Vorzugsweise stellt die Gasmessvorrichtung in dem Verfahrensschritt S33 die Sensordaten des Gassensormoduls SM aus Figur 1 oder daraus abgeleitete Werte bereit.

Das Bereitstellen von Informationen bzw. Daten in dem Verfahrensschritt S33 erfolgt über die erste Funksendeeinheit FM1 aus der Figur 1.

In dem Verfahrensschritt S34 erfolgt eine Erfassung von Audiodaten und/oder Bilddaten über die Bilderfassungseinheit KA bzw. die Audioerfassungseinheit MI aus der Figur 1.

Solche Audio- bzw. Bilddaten sind auf ein räumliches Umfeld der Gasmessvorrichtung V bezogen.

In dem Verfahrensschritt S35 erfolgt dann eine Bereitstellung der Audiodaten und/oder Bilddaten über die zweite Funksendeeinheit FM2 aus der Figur 1.

Ein Übersenden der Kennungen jener Sendeeinheiten, welche sich in hinreichender räumlicher Nähe zu der Gasmessvorrichtung befinden, ist eine sehr kritische Information, welche mit hoher Priorität zum Beispiel an eine Zentrale bereitgestellt bzw. übermittelt werden muss. Die Bild- und/oder Tondaten, welche mittels der zweiten Funksendeeinheit FM2 übermittelt werden, können zwar auch in der Zentrale zu einer Darstellung bzw. Auswertung herangezogen werden, stellen aber gegenüber Kennungen der Sendeeinheiten nur zusätzliche Informationen dar, welche eine niedrigere Priorität genießen sollten. Daher kann die zweite Funksendeeinheit FM2 beispielsweise nach einem Mobilfunkstandard wie dem LTE Standard funktionieren, welcher zwar höhere Datenraten bereitstellen kann als beispielsweise die Funksendeeinheit FM1 nach dem LoRa Standard oder dem Sigfox Standard; jedoch ist eben auch eine solche Übermittlung über die zweite Funksendeeinheit FM2 mittels beispielsweise der LTE Technologie weniger robust als eine Datenübertragung über die erste Funksendeeinheit FM1 mittels beispielsweise dem Lora Standard. Daher ist die hier angesprochene bzw. vorgeschlagene Lösung also vorteilhaft, da bei Verwendung unterschiedlicher Funksendeeinheit FM1, FM2 für unterschiedliche Arten von Informationen mit unterschiedlicher Priorität der Übermittlung bzw. Bereitstellung der Wichtigkeit bzw. Priorität der Informationen Sorge getragen wird.

In einem Verfahrensschritt S36 kann dann entschieden werden, ob möglicherweise der potentielle Gefährdungszustand nicht mehr vorliegt. Dies kann beispielsweise dann der Fall sein, wenn über das Datenmodul DM eine Quittierungsnachricht QN empfangen wurde, welche mit einem entsprechenden Datenelement Q indiziert, dass kein potentieller Gefährdungszustand mehr vorliegt. Dieses kann beispielsweise eine entsprechende Quittierungsnachricht QN aus einer Zentrale sein, welche eine Gasmessvorrichtung V aus der Figur 1 zurück in den ersten Betriebszustand BZ1 versetzen möchte.

Die Alarminformation AI wird dann also wieder zu 0 gesetzt.

Somit kann dann in dem Fall, dass eine Quittierungsnachricht QN vorliegt, von dem Verfahrensschritt S36 zurück zu dem Verfahrensschritt S2 zurückgekehrt werden.

Alternativ kann das gesamte Verfahren beendet werden, indem zu einem Verfahrensschritt S40 als Endeverfahrensschritt verzweigt wird.

Liegt weiterhin der Gefährdungszustand vor, so wird von dem Verfahrensschritt S36 hin zu einem Verfahrensschritt S37 verzweigt, in welchem für das Zeitintervall dt gewartet wird. Dadurch, dass in dem Verfahrensschritt S30A die Wartezeit dt auf den Wert dt2 gesetzt wurde, wird für eine kürzere Zeitdauer gewartet als in den Verfahrensschritt S6 des ersten Betriebszustandes BZ1. Die Zeitdauer dt2 ist eben kleiner als die Zeitdauer dt1.

Die Figur 3 zeigt detailliert die Teilverfahrensschritte zu dem Verfahrensschritt S32 zur Auswertung von Funksignalen aus der Figur 2. Es sei angenommen, dass ein Funksignal einer tragbaren Sendeeinheit mehrere Datenfelder DF indiziert. In einem ersten Teilschritt S300 kann dann ein bestimmtes Datenfeld ausgelesen werden, welches eine Sendeleistung beim Versenden des entsprechenden Funksignals indiziert. Hierfür kann beispielsweise nach dem Standard Bluetooth Core Specification 5.0, Seite 2585, Kapitel 2.3.4.7, ein sogenanntes TX Power-Field ausgelesen werden, um auf die Sendeleistung, mit welcher das Funksignal ausgesendet wurde, zu schließen. Mit anderen Worten: Es wird angenommen, dass die jeweiligen Funksignale jeweilige Sendeleistung indizieren, mit welchen die jeweiligen Funksignale ausgesendet wurden.

Es wird nun im Weiteren beschrieben, wie auf Basis der indizierten Sendeleistung festgestellt werden kann, ob die entsprechende Sendeeinheit, welche das entsprechende Funksignal ausgesendet hat, eine hinreichende räumliche Nähe zu der Gasmessvorrichtung V aus der Figur 1 aufweist.

In einem Verfahrensschritt S301 wird dann unter Verwendung des Funkempfangsmoduls BM eine Empfangsleistung beim Empfang des entsprechenden Funksignals bestimmt.

In einem Verfahrensschritt S302 wird dann auf Basis der indizierten Sendeleistung und der zuvor bestimmten Empfangsleistung eine Entfernung abgeschätzt bzw. bestimmt, welche die Entfernung zwischen der entsprechenden Sendeeinheit und der Gasmessvorrichtung V sein soll.

In einem Verfahrensschritt S303 kann dann beispielsweise noch unter Anwendung eines sogenannten Schwellenwertes entschieden werden, ob die geschätzte bzw. bestimmte Entfernung aus dem Verfahrensschritt S302 darauf hinweist, dass die entsprechende Sendeeinheit eine hinreichende räumliche Nähe zu der Gasmessvorrichtung V im Moment des Versendens bzw. Empfangens des entsprechenden Funksignals aufgewiesen hat.

Das Funksignal bzw. ein dazugehöriges Datenfeld DF indiziert ferner eine Kennung der jeweiligen tragbaren Sendeeinheit, welche das Funksignal ausgesendet hat.

In einem Datenelement IN können dann jene Kennungen der entsprechenden Sendeeinheiten aufgeführt sein, für welche in dem Verfahrensschritt S303 eine hinreichende räumliche Nähe zu der Gasmessvorrichtung V aus der Figur 1 festgestellt wurde.

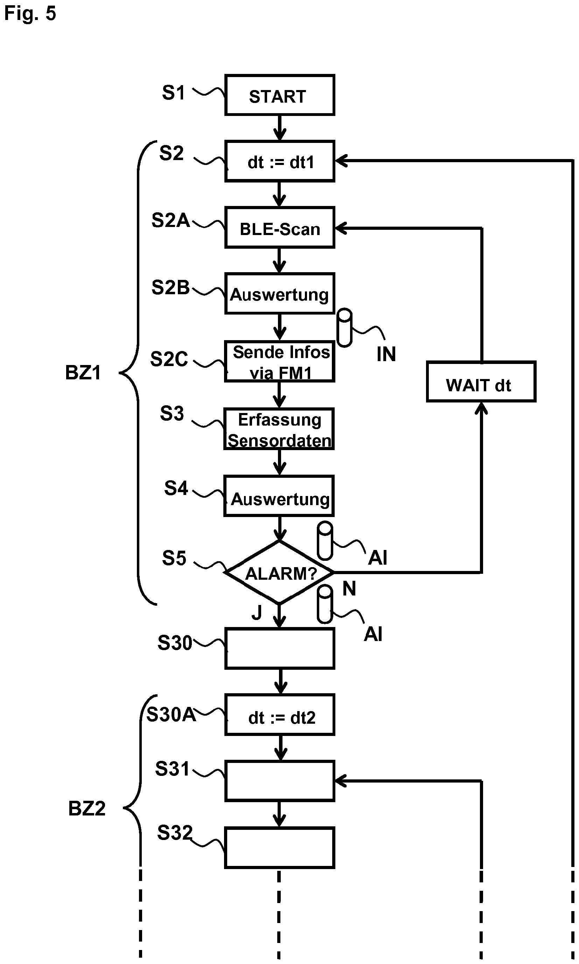

Die Figur 5 zeigt eine bevorzugte Ausführungsform von bevorzugten Teilschritten in einer bevorzugten Variante des ersten Betriebszustandes BZ1. Hierbei erfolgt in dem ersten Betriebszustand BZ1 nach dem Verfahrensschritt S2 ein Empfangen von Funksignalen bzw. ein BLE-Scan wie zuvor beschrieben unter Bezug auf den Verfahrensschritt S31.

In dem Verfahrensschritt S2B erfolgt dann eine Auswertung der Funksignale in analoger Weise zu dem Verfahrensschritt S32 aus der Figur 2 bzw. wie zuvor detailliert erläutert unter Bezug auf die Figur 3.

In dem Verfahrensschritt S2C erfolgt dann eine Bereitstellung bzw. ein Versenden jener Kennungen von Sendeeinheiten, für welche eine hinreichende Nähe bzw. eine hinreichende räumliche Nähe zu der Gasmessvorrichtung V festgestellt wurde.

Dieses Versenden von Informationen erfolgt in dem Verfahrensschritt S2C in analoger Weise zu dem Verfahrensschritt S33 aus der Figur 2.

Es folgen dann weitere Verfahrensschritte S3 und fortfolgende, wie bereits zuvor unter Bezug auf die Figur 2 beschrieben.

Insbesondere erfolgt in dem ersten Betriebszustand BZ1 innerhalb des Verfahrensschrittes S6 ein Warten für das Zeitintervall dt, welches aufgrund des Verfahrensschrittes S2 auf den Wert dt1 gesetzt wurde.

In dem zweiten Betriebszustand BZ2 erfolgt dann eben wie zuvor beschrieben innerhalb des Verfahrensschrittes S37 ein Warten für das Zeitintervall dt2, welches aufgrund des Verfahrensschrittes S30A auf den Wert dt2 gesetzt wurde.

Da das Zeitintervall dt1 vorzugsweise größer ist als das Zeitintervall dt2, wird für einen längeren Zeitraum in dem Verfahrensschritt S6 gewartet als in dem Verfahrensschritt S37. Somit wird vorzugsweise in dem ersten Betriebszustand BZ1 ein Erfassen von Funksignalen (BS) mit einer geringeren Erfassungsrate durchgeführt als in dem zweiten Betriebszustand (BZ2).

In dieser Ausführungsform nach der Figur 5 erfolgt sowohl in dem ersten Betriebszustand BZ1 ein Erfassen von Funksignalen, nämlich in dem Verfahrensschritt S2B, als auch in dem zweiten Betriebszustand BZ2, nämlich in dem Verfahrensschritt S31.

Aufgrund der zuvor genannten Wahl der Werte für die Zeitintervalle dt1 sowie dt2 lässt sich also feststellen, dass in dem ersten Betriebszustand mittels der Funkempfangseinheit BM Funksignale, welche jeweilige Kennungen tragbarer Sendeeinheiten indizieren, mit einer ersten Erfassungsrate erfasst werden und in dem zweiten Betriebszustand BZ2 mittels der Funkempfangseinheit BM Funksignale, welche jeweilige Kennungen tragbarer Sendeeinheiten indizieren, mit einer zweiten Erfassungsrate erfasst werden. Vorzugsweise ist die zweite Erfassungsrate höher ist als die erste Erfassungsrate. Alternativ kann vorzugsweise die zweite Erfassungsrate gleich der ersten Erfassungsrate sein.

Für den Fall, dass die zweite Erfassungsrate höher ist als die erste Erfassungsrate ergibt sich der Vorteil , dass der erste Betriebszustand BZ1 als ein sogenannter sleep-mode angesehen werden kann, in welchem nur mit einer geringen Erfassungsrate bzw. Detektionsrate Kennungen erfasst werden, welche dann über die Funksendeeinheit FM1 bereitgestellt werden, welches in dem Fall, dass eben keine Gefährdung vorliegt, hinreichend sein kann und Energie spart gegenüber dem zweiten Betriebszustand BZ2. Der zweite Betriebszustand BZ2 soll eben ein solcher sein, in welchem bereits zuvor detektiert wurde, dass eine Gefährdungssituation vorliegt, sodass eben dann auch die Funksignale mit den jeweiligen Kennungen tragbarer Sendeeinheiten mit einer höheren Rate erfasst werden sollen, um auch mit einer höheren Rate die entsprechenden Kennungen über die erste Funksendeeinheit FM1 zu übermitteln bzw. bereitzustellen.

Hierdurch wird Sorge getragen, dass in dem Fall einer Gefährdungssituation, also dem zweiten Betriebszustand BZ2, öfter bzw. mit höherer Rate entsprechende Informationen über eine hinreichende räumliche Nähe von tragbaren Sendeeinheiten bzw. deren Nutzer/Arbeitern zu der Gasmessvorrichtung V übermittelt bzw. bereitgestellt werden.

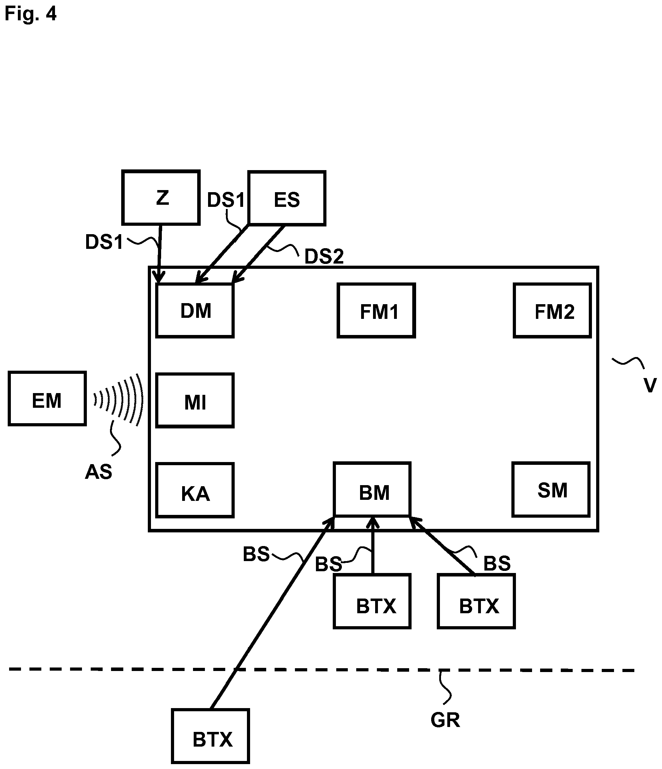

Die Figur 4 zeigt eine Systemübersicht, in welcher die Vorrichtung V verwendet werden kann.

Tragbare Sendeeinheiten BTX übermitteln Funksignale BS hin zu der Funkempfangseinheit BM der Vorrichtung V.

Die Vorrichtung V kann dann anhand der Kontrolleinheit K in der zuvor beschriebenen Weise die Funksignale BS auswerten und die zuvor beschriebenen Informationen über die Funksendeeinheiten FM1, FM2 bereitstellen.

Beispielsweise kann es der Fall sein, dass nur für solche Sendeeinheiten BTX eine hinreichende räumliche Nähe angenommen wird, für welche es der Fall ist, dass sie sich innerhalb einer gedachten Grenzlinie GR in der Nähe der Vorrichtung V befinden. Gemäß des Beispiels der Figur 4 ist dies nur für zwei Sendeeinheiten BTX der Fall, nicht aber für jene Sendeeinheit BTX, welche sich jenseits der gedachten Abstandsgrenze GR befindet.

Es ist ferner denkbar, dass ein externes Gasmessgerät EM vorhanden ist, welches in einem Alarmfall bzw. einer Gefährdungssituation ein akustisches Signal AS emittiert. Ein solches Signal AS kann dann, beispielsweise von dem Mikrofon bzw. der Audioerfassungseinheit MI erfasst werden und durch die Kontrolleinheit K ausgewertet werden.

Es ist ferner möglich, dass eine externe Sensoreinheit ES vorhanden ist, welche über ein Datensignal DS2 hin zu dem Datenmodul DM mittels des Datensignals DS2 Sensorwerte der externen Sensoreinheit ES übermittelt.

Vorzugsweise weist die externe Sensoreinheit ES eine eigene Sendeeinheit BTX auf.

Ferner ist es möglich, dass die externe Sensoreinheit selber eine Alarmierungsfunktion aufweist, sodass diese mittels eines Datensignals DS1 eine Information über ein Vorliegen eines Alarmierungsfalles bzw. einer Gefährdungssituation an das Datenmodul DM übermitteln kann. Ferner ist es ebenso möglich, dass von einer zentralen Einheit Z mittels eines eben solchen Datensignals DS1 eine Alarminformation bezüglich eines Vorliegens einer Alarmierungssituation bzw. eines Gefährdungszustandes an das Datenmodul DM übermittelt wird.

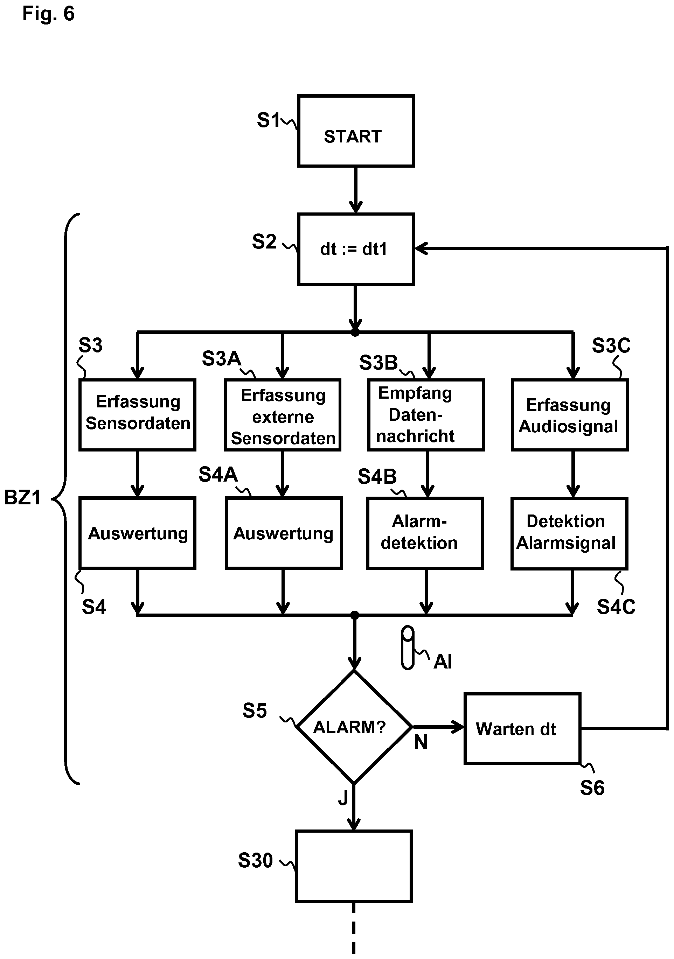

Es wird nun unter Bezug auf die Figur 6 beschrieben, in welcher Weise die Vorrichtung V bzw. deren Kontrolleinheit K in unterschiedlicher Weise eine Gefährdungssituation bzw. einen Gefährdungszustand detektieren kann.

Die Figur 6 zeigt den zuvor unter Bezug auf die Figuren 2 und 5 erwähnten Verfahrensschritt S1.

Es folgt der zuvor erwähnte Verfahrensschritt S2, in welchem das Zeitintervall auf den Wert dt1 gesetzt wird.

Eine Detektion des Gefährdungszustandes kann gemäß der im linken Bereich gezeigten Verfahrensschritte S3 sowie S4, welche bereits zuvor unter Bezug auf die Figur 2 beschrieben wurden, detektiert werden, um eine entsprechende Alarminformation AI zu erstellen.

Neben dieser Möglichkeit, einen Gefährdungszustand zu detektieren, ergeben sich weitere Möglichkeit zur Detektion des Gefährdungszustandes.

Parallel zu den Verfahrensschritten S3 und S4 erfolgend Verfahrensschritte S3A und S4A, wobei in dem Verfahrensschritt S3A Sensordaten mittels des zuvor erwähnten Datensignals DS2 über das Datenmodul DM empfangen werden und dann in dem Verfahrensschritt S4A in analoger Weise zu dem Verfahrensschritt S4 ausgewertet werden, um einen potentiellen Gefährdungszustand zu detektieren.

Es ist also möglich, dass mittels des Datenmoduls DM aus der Figur 1 eine oder mehrere Datennachrichten DS2 empfangen werden, welche weitere Sensordaten eines weiteren, externen Gassensormodul ES, siehe Figur 4, indizieren, sodass auf Basis der weiteren Sensordaten der potentiellen Gefährdungszustand detektiert wird.

Die Verfahrensschritte S3B und S4B zeigen eine weitere Möglichkeit zur Detektion des Gefährdungszustandes.

In dem Verfahrensschritte S3B kann beispielsweise ein Datensignal DS1 aus der Figur 4 empfangen werden, welches ein Vorliegen eines Alarms indiziert. Mit anderen Worten: Das Datensignal DS1 ist eine Alarmnachricht. Diese Alarmnachricht DS1 kann von einer zentralen Einheit Z oder von einer externen Sensoreinheit ES empfangen werden.

In dem Verfahrensschritt S4B kann dann auf Basis der Alarmnachricht DS1 der potentielle Gefährdungszustand detektiert werden.

Die Verfahrensschritte S3C sowie S4C zeigen eine weitere Möglichkeit zur Detektion eines Gefährdungszustandes. Hierbei werden in dem Verfahrensschritt S3C Audiodaten mittels der Bilderfassungseinheit MI erfasst. In dem Verfahrensschritt S4C wird dann auf Basis dieser erfassten Audiodaten ein Vorliegen eines vorbestimmten akustischen Signals bzw. Signalmusters detektiert. Ein solches Signalmuster kann in der Speichereinheit MEM der Vorrichtung V aus der Figur 1 abgespeichert sein und durch diese Speichereinheit MEM bereitgestellt werden.

Wird detektiert, dass das vorbestimmte akustische Signal bzw. vorbestimmte akustische Signalmuster vorliegt, so wird dann der potentielle Gefährdungszustand detektiert.

Die Figur 6 zeigt eine Ausführungsform des ersten Betriebszustandes BZ1, bei welchem die vier unterschiedlichen Weisen zur Detektion des Gefährdungszustandes alle parallel zueinander ausgeführt werden können. Es versteht sich für einen Fachmann von selbst, dass nur eine oder mehrere dieser Auswertungsweisen implementiert sein können.

Ferner ist es für einen Fachmann möglich, eine oder mehrere Ausgestaltungen, welche unter Bezug auf die Figur 6 beschrieben wurden, in Kombination mit Ausgestaltungen, welche unter Bezug auf die Figur 5 beschrieben wurden, zu kombinieren.

Gemäß der Figur 2 kann in dem Verfahrensschritt S36 eine Quittierungsnachricht QN empfangen werden und bei Vorliegen dieser Quittierungsnachricht QN der zweite Betriebszustand BZ2 beendet werden.

Es ist ebenso möglich, dass in dem Fall, dass die Vorrichtung V aus der Figur 1 eine Eingabeeinheit EE zur Entgegennahme einer Nutzereingabe aufweist, sodass in dem Fall, dass eine vorbestimmte Nutzereingabe durch die Eingabeeinheit EE entgegen genommen wird, die Kontrolleinheit K den zweiten Betriebszustand BZ2 beendet. Die vorbestimmte Nutzereingabe kann beispielsweise ein bestimmtes Wischmuster bzw. eine vorbestimmte Wischgeste sein, welche in der Speichereinheit MEM aus der Figur 1 abgelegt ist. Die vorbestimmte Nutzereingabe kann auch darin bestehen, dass die Eingabeeinheit EE ein Knopf oder ein Taster ist, welcher durch einen Nutzer gedrückt wird.

Zusammengefasst kann gesagt werden, dass die Kontrolleinheit vorzugsweise ferner ausgebildet ist, in dem ersten Betriebszustand mittels der Funkempfangseinheit ein oder mehrere Funksignale, welche jeweilige Kennungen tragbarer Sendeeinheiten indizieren, mit einer ersten Erfassungsrate zu erfassen, sowie auf Basis der Funksignale festzustellen, welche der Sendeeinheiten eine hinreichende räumliche Nähe zu der Gasmessvorrichtung aufweisen und die Kennungen der Sendeeinheiten mit einer hinreichenden räumlichen Nähe über die erste Funksendeeinheit mit einer ersten Übermittlungsrate zu übermitteln. Es ist ferner vorzugsweise die Kontrolleinheit ferner ausgebildet ist, in dem zweiten Betriebszustand mittels der Funkempfangseinheit ein oder mehrere Funksignale, welche jeweilige Kennungen tragbarer Sendeeinheiten indizieren, mit einer zweiten Erfassungsrate zu erfassen, sowie auf Basis der Funksignale festzustellen, welche der Sendeeinheiten eine hinreichende räumliche Nähe zu der Gasmessvorrichtung aufweisen und die Kennungen der Sendeeinheiten mit einer hinreichenden räumlichen Nähe über die erste Funksendeeinheit (FM1) mit einer zweiten Übermittlungsrate zu übermitteln, wobei die zweite Erfassungsrate vorzugsweise höher ist als die erste Erfassungsrate.

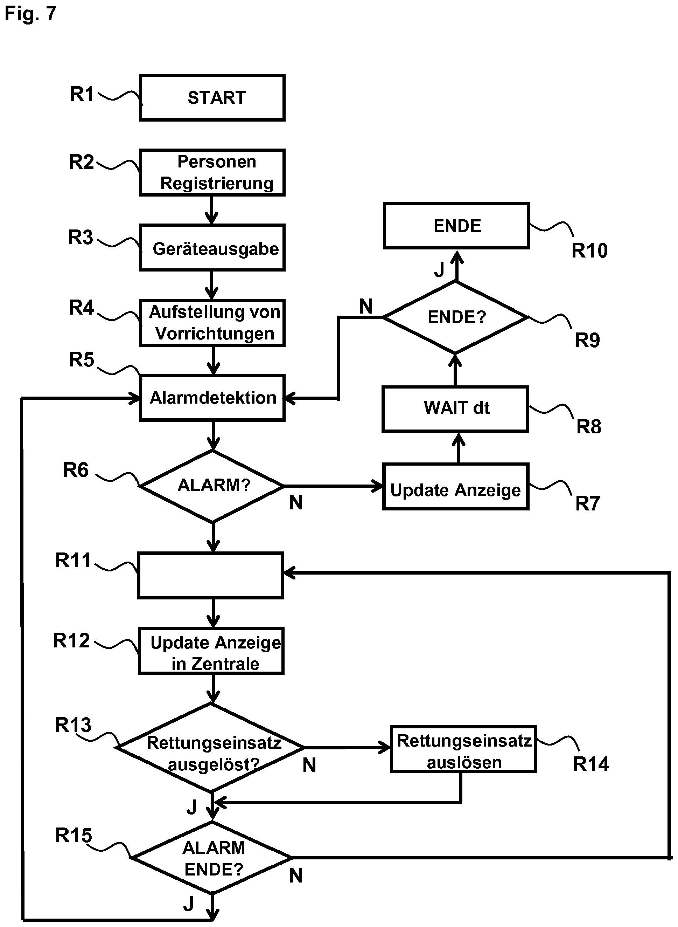

Figur 7 zeigt einen Ablauf von unterschiedlichen Schritten eines Szenarios, in welchem die erfindungsgemäße Vorrichtung V zum Einsatz kommen kann.

In einem ersten Schritt R1 beginnt ein Ablauf des Szenarios.

In einem Schritt R2 können Personen beispielsweise an einer Zentrale registriert werden, sodass dann in einem Schritt R3 Geräte bzw. tragbare Sendeeinheiten den jeweiligen Personen zugeordnet werden und an diese Person ausgegeben werden. Es kann dann also in dieser Zentrale ein Datensatz vorhanden sein, welche Personennamen zu Kennungen von Geräten bzw. tragbaren Sendeeinheiten zu ordnen.

In einem Schritt R4 kann die erfindungsgemäße Vorrichtung bzw. mehrere erfindungsgemäße Vorrichtungen an entsprechenden Orten aufgestellt werden.

Es kann hierbei zu einer Ortsregistrierung kommen, indem in der Zentrale Ortsdaten nachgehalten werden, welche die jeweiligen Standorte bzw. Orte der jeweiligen Vorrichtungen indizieren.

Vorzugsweise können solche Ortsinformationen dadurch gewonnen werden, dass eine Gasmessvorrichtung ein GPS Modul aufweist, welches Ortsdaten generiert und dass dann die entsprechenden Ortsdaten der entsprechenden Vorrichtungen an die Zentrale übermittelt werden.

Der Schritt R5 repräsentiert im Wesentlichen den ersten Betriebszustand BZ1 aus den zuvor genannten Figuren, in welchem eine Alarmdetektion erfolgen kann.

Wird gemäß des Schrittes R6 dann eine solche Alarmsituation detektiert, so kann zu einem Schritt R11 verzweigt werden, welcher die Schritte S30 bis S35 der vorherigen Figuren repräsentiert.

In einem Schritt R12 kann in einem Kontrollraum der Zentrale ein Update von Anzeigen von Informationen erfolgen, wobei diese Informationen eben von den erfindungsgemäßen Gasmessvorrichtungen gewonnen werden. Hierbei kann es sich um Informationen bezogen auf eine Anwesenheit von tragbaren Sendeeinheiten bzw. Arbeitern an bestimmten Orten handeln.

In einem Schritt R13 kann überlegt werden, ob bereits ein Rettungseinsatz ausgelöst wurde. Ist dies nicht der Fall, so wird zu einem Schritt R14 verzweigt, in welchem ein Rettungseinsatz ausgelöst wird.

Wurde bereits ein Rettungseinsatz ausgelöst, so wird von dem Schritt R13 zu einem Schritt R15 verzweigt, welcher im Wesentlichen den Verfahrensschritt S36 aus der Figur 2 entspricht.

Wird die Gefährdungssituation bzw. der Alarm beendet, so wird zurückgekehrt zu dem Schritt R5.

Wurde der Alarm bzw. die Gefährdungssituation nicht beendet, so wird zurückgekehrt zu dem Schritt R11.

Wurde in dem Schritt R6 entschieden, dass keine Alarmsituation bzw. keine Gefährdungssituation vorliegt, so kann zu einem Schritt R7 verzweigt werden, in welchem ein Update von einer Statusanzeige in einer Zentrale erfolgen kann, um aktuelle Daten bezogen auf eine Anwesenheit von tragbaren Sendeeinheiten bzw. der Nutzer/Arbeitern bei Messvorrichtungen anzuzeigen.

Ein darauf folgender Schritt R8 entspricht im Wesentlichen dem Schritt S6 aus den Figuren 2, 5 bzw. 6, in welchem dann für eine vorbestimmte Zeitdauer von dt gewartet wird.

In einem Schritt R9 wird entschieden, ob die generelle Überwachung bzw. das Monitoring eines räumlichen Bereiches durch erfindungsgemäße Gasmessvorrichtungen beendet werden soll oder nicht.

Ist dies nicht der Fall, so wird zurück verzweigt zu einem Verfahrensschritte R5. Ist dies der Fall, so wird von dem Verfahrensschritt R9 zu einem Verfahrensschritt R10 verzweigt, in welchem das Verfahren beendet ist.

Die hier beschriebenen Ausführungsbeispiele sind nicht als Einschränkung der Erfindung zu verstehen. Vielmehr sind im Rahmen der vorliegenden Offenbarung durchaus auch Kombination von einzelnen in Verbindung mit den im allgemeinen oder speziellen Beschreibungsteil beschriebenen sowie in den Ansprüchen und/oder der Zeichnung enthaltenen Merkmalen oder Verfahrensschritten möglich.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente, wie beispielsweise die hier erwähnte Kontrolleinheit K und/oder die hier erwähnte Recheneinheit R, kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikro-prozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein Programm gemäß eines Ausführungsbeispiels kann die hier beschreibene Funktionsweise z.B. in Form eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch Schreiben in eine oder mehrere Speicherstellen eine Aktion bewirken, veranlassen oder durchführen sowie andere Geräte, Maschinen und Komponenten ansteuern.

### Bezugszeichenliste

- AI: Alarminformation
- AS: Akustisches Signal
- BM: Funkempfangseinheit
- BS: Funksignale
- BTX: Sendeeinheiten
- BZ1: Erster Betriebszustand
- BZ2: Zweiter Betriebszustand
- DF: Datenfelder
- DM: Datenmodul
- DS1: Datensignal
- DS2: Datensignal
- dt: Zeitintervall
- dt1: Zeitwert
- dt2: Zeitwert
- EE: Eingabeeinheit
- EE: Eingabeeinheit
- EM: Externes Gasmessgerät
- ES: Externe Sensoreinheit
- FM1: Erste Funksendeeinheit
- FM2: Zweite Funksendeeinheit
- GR: Grenzlinie
- I: Schnittstelle
- I1: Schnittstelle
- I2: Schnittstelle
- I3: Schnittstelle
- I4: Schnittstelle
- I5: Schnittstelle
- I7: Schnittstelle
- I8: Schnittstelle
- IDB: Interner Datenbus
- IN: Datenelement
- K: Kontrolleinheit
- KA: Bilderfassungseinheit
- MEM: Speichereinheit
- MI: Audioerfassungseinheit
- Q: Datenelement
- QN: Quittierungsnachricht
- R: Recheneinheit
- R1: Schritt
- R10: Schritt
- R11: Schritt
- R12: Schritt
- R13: Schritt
- R14: Schritt
- R15: Schritt
- R2: Schritt
- R3: Schritt
- R4: Schritt
- R5: Schritt
- R6: Schritt
- R7: Schritt
- R8: Schritt
- R9: Schritt
- S1: Verfahrensschritt
- S2: Verfahrensschritt
- S2B: Verfahrensschritt
- S2C: Verfahrensschritt
- S3: Verfahrensschritt
- S30: Verfahrensschritt
- S300: Verfahrensschritt
- S301: Verfahrensschritt
- S302: Verfahrensschritt
- S303: Verfahrensschritt
- S30A: Verfahrensschritt
- S31: Verfahrensschritt
- S32: Verfahrensschritt
- S33: Verfahrensschritt
- S34: Verfahrensschritt
- S35: Verfahrensschritt
- S36: Verfahrensschritt
- S37: Verfahrensschritt
- S3A: Verfahrensschritt
- S3B: Verfahrensschritt
- S3C: Verfahrensschritt
- S4: Verfahrensschritt
- S40: Verfahrensschritt
- S4A: Verfahrensschritt
- S4B: Verfahrensschritt
- S4C: Verfahrensschritt
- S5: Verfahrensschritt
- S6: Verfahrensschritt
- SM: Gassensormodul
- V: Gasmessvorrichtung
- Z: Zentrale Einheit

## Patentansprüche

1. Gasmessvorrichtung (V),
aufweisend
- eine Kontrolleinheit (K),
- ein Gassensormodul (SM),
- eine Funkempfangseinheit (BM),
- eine erste Funksendeeinheit (FM1)
- sowie eine zweite Funksendeeinheit (FM2)
wobei die Kontrolleinheit (K) ausgebildet ist, in einem ersten Betriebszustand (BZ1)
- mittels des Gassensormoduls (SM) Sensordaten (SD) zu erfassen und auf Basis der Sensordaten (SD) einen potentiellen Gefährdungszustand zu detektieren
- sowie bei Detektion des Gefährdungszustandes in einen zweiten Betriebszustand (BZ2) zu wechseln,
wobei die Kontrolleinheit (K) ferner ausgebildet ist, in dem zweiten Betriebszustand (BZ2)
- mittels der Funkempfangseinheit (BM) ein oder mehrere Funksignale (BS), welche jeweilige Kennungen jeweiliger tragbarer Sendeeinheiten (BTX) indizieren, zu erfassen,
- sowie auf Basis der Funksignale (BS) festzustellen, welche der Sendeeinheiten (BTX) eine hinreichende räumliche Nähe zu der Gasmessvorrichtung aufweisen und die Kennungen der hinreichend nahen Sendeeinheiten über die erste Funksendeeinheit (FM1) bereitzustellen
wobei die Gasmessvorrichtung (V) ferner eine Audioerfassungseinheit (MI) und/oder eine Bilderfassungseinheit (KA) aufweist, und
wobei die Kontrolleinheit (K) ferner ausgebildet ist, bei Vorliegen des zweiten Betriebszustandes (BZ2) mittels der Audioerfassungseinheit (MI) Audiodaten und/oder mittels der Bilderfassungseinheit (KA) Bilddaten bezogen auf ein räumliches Umfeld der Gasmessvorrichtung zu erfassen und über die zweite Funksendeeinheit (FM2) als zusätzliche Information gegenüber Kennungen der Sendeeinheiten bereitzustellen.

2. Gasmessvorrichtung nach Anspruch 1,
wobei die jeweiligen Funksignale (BS) jeweilige Sendeleistungen indizieren, mit welchen die jeweiligen Funksignale (BS) ausgesendet wurden,
und wobei die Kontrolleinheit (K) ferner ausgebildet ist, auf Basis der indizierten Sendeleistungen festzustellen, welche der Sendeeinheiten (BTX) eine hinreichende räumliche Nähe zu der Gasmessvorrichtung aufweisen.

3. Gasmessvorrichtung nach einem der vorhergehenden Ansprüche,
wobei die Kontrolleinheit (K) ferner ausgebildet ist,
- in dem ersten Betriebszustand (BZ1) mittels der Funkempfangseinheit (BM) ein oder mehrere Funksignale (BS), welche jeweilige Kennungen tragbarer Sendeeinheiten (BTX) indizieren, mit einer ersten Erfassungsrate zu erfassen,
- sowie in dem zweiten Betriebszustand (BZ2) mittels der Funkempfangseinheit (BM) ein oder mehrere Funksignale (BS), welche jeweilige Kennungen tragbarer Sendeeinheiten (BTX) indizieren, mit einer zweiten Erfassungsrate zu erfassen,
wobei die zweite Erfassungsrate höher ist als die erste Erfassungsrate.

4. Gasmessvorrichtung nach einem der vorhergehenden Ansprüche, ferner aufweisend ein Datenmodul (DM) zum Empfangen von Datennachrichten,
wobei die Kontrolleinheit (K) ferner ausgebildet ist,
- mittels des Datenmoduls ein oder mehrere Datennachrichten zu empfangen, welche weitere Sensordaten eines weiteren, externen Gassensormoduls (ES) indizieren, und auf Basis der weiteren Sensordaten den potentiellen Gefährdungszustand zu detektieren, und/oder
- mittels des Datenmoduls (DM) wenigstens eine Alarmnachricht (DS1) zu empfangen, welche ein mögliches Vorliegen eines Gefährdungszustandes indiziert, und auf Basis der Alarmnachricht (DS1) den potentiellen Gefährdungszustand zu detektieren, und/oder
- in dem zweiten Betriebszustand (BZ2) mittels des Datenmoduls (DM) eine Quittierungsnachricht (QN) zu empfangen und bei Vorliegen der Quittierungsnachricht (QN) den zweiten Betriebszustand (BZ2) zu beenden.

5. Gasmessvorrichtung nach einem der vorhergehenden Ansprüche, ferner aufweisend eine Schnittstelle (I5) zu einer Audioerfassungseinheit (MI),
wobei die Kontrolleinheit (K) ferner ausgebildet ist,
- mittels der Schnittstelle (I5) Audiodaten zu erfassen,
- auf Basis der Audiodaten ein Vorliegen eines vorbestimmten akustischen Signals zu detektieren
- und bei Vorliegen des vorbestimmten akustischen Signals den potentiellen Gefährdungszustand zu detektieren.

6. Gasmessvorrichtung nach einem der vorhergehenden Ansprüche, ferner aufweisend eine Eingabeeinheit (EE) zum Entgegennehmen einer vorbestimmten Nutzereingabe,
wobei die Kontrolleinheit (K) ferner ausgebildet ist, in dem zweiten Betriebszustand (BZ2) bei Vorliegen der vorbestimmten Nutzereingabe den zweiten Betriebszustand (BZ2) zu beenden.

## Claims

1. A gas measuring device (V),
comprising
- a control unit (K),
- a gas sensor module (SM),
- a radio receiving unit (BM),
- a first radio transmitting unit (FM1)
- and a second radio transmitting unit (FM2),
wherein the control unit (K) is designed, in a first operating state (BZ1),
- to capture sensor data (SD) by means of the gas sensor module (SM) and to detect a potential hazard state on the basis of the sensor data (SD)
- and to switch to a second operating state (BZ2) when the hazard state is detected,
wherein the control unit (K) is further designed, in the second operating state (BZ2),
- to detect, by means of the radio receiving unit (BM), one or more radio signals (BS) which indicate respective identifiers of respective portable transmitting units (BTX),
- and to determine, on the basis of the radio signals (BS), which of the transmitting units (BTX) have a sufficient spatial proximity to the gas measuring device and to provide the identifiers of the sufficiently proximal transmitting units via the first radio transmitting unit (FM1),
wherein the gas measuring device (V) further comprises an audio capturing unit (Ml) and/or an image capturing unit (KA), and
wherein the control unit (K) is further designed, in the presence of the second operating state (BZ2), to capture audio data by means of an audio capturing unit (Ml), and/or visual data by means of the image capturing unit (KA), with respect to a spatial environment of the gas measuring device, and to provide these, via the second radio transmitting unit (FM2), as additional information regarding identifiers of the transmitting units.

2. The gas measuring device according to claim 1,
wherein the respective radio signals (BS) indicate respective transmission powers with which the respective radio signals (BS) have been transmitted,
and wherein the control unit (K) is further designed to determine which of the transmitting units (BTX) have a sufficient spatial proximity to the gas measuring device on the basis of the indicated transmission powers.

3. The gas measuring device according to either of the preceding claims,
wherein the control unit (K) is further designed
- to detect, in the first operating state (BZ1), one or more radio signals (BS), which indicate respective identifiers of portable transmitting units (BTX), by means of the radio receiving unit (BM) at a first detection rate,
- and to detect, in the second operating state (BZ2), one or more radio signals (BS), which indicate respective identifiers of portable transmitting units (BTX), by means of the radio receiving unit (BM) at a second detection rate,
wherein the second detection rate is higher than the first detection rate.

4. The gas measuring device according to any of the preceding claims, further comprising a data module (DM) for receiving data messages,
wherein the control unit (K) is further designed
- to receive, by means of the data module, one or more data messages which indicate further sensor data of a further, external gas sensor module (ES), and to detect the potential hazard state on the basis of the further sensor data, and/or
- to receive, by means of the data module (DM), at least one alarm message (DS1) which indicates a possible presence of a hazard state, and to detect the potential hazard state on the basis of the alarm message (DS1), and/or
- to receive, in the second operating state (BZ2), an acknowledgment message (QN) by means of the data module (DM), and to terminate the second operating state (BZ2) when the acknowledgment message (QN) is present.

5. The gas measuring device according to any of the preceding claims, further comprising an interface (I5) to an audio capturing unit (Ml),
wherein the control unit (K) is further designed
- to capture audio data by means of the interface (I5),
- to detect a presence of a predetermined acoustic signal on the basis of the audio data,
- and to detect the potential hazard state in the presence of the predetermined acoustic signal.

6. The gas measuring device according to any of the preceding claims, further comprising an input unit (EE) for receiving a predetermined user input,
wherein the control unit (K) is further designed, in the second operating state (BZ2), to terminate the second operating state (BZ2) when the predetermined user input is present.

## Revendications

1. Dispositif de mesure de gaz (V),
présentant
- une unité de commande (K),
- un module de capteur de gaz (SM),
- une unité de réception radio (BM),
- une première unité d'émission radio (FM1)
- ainsi qu'une seconde unité d'émission radio (FM2)
dans lequel l'unité de commande (K) est conçue, dans un premier état de fonctionnement (BZ1)
- pour collecter des données de capteur (SD) à l'aide du module de capteur de gaz (SM) et détecter un potentiel état de danger sur la base des données de capteur (SD)
- et pour passer à un second état de fonctionnement (BZ2) à la détection de l'état de danger,
dans lequel l'unité de commande (K) est en outre conçue, dans un second état de fonctionnement (BZ2)
- pour détecter, à l'aide de l'unité de réception radio (BM), un ou plusieurs signaux radio (BS), lesquels indiquent des identifiants respectifs d'unités d'émission (BTX) portatives respectives,
- et, sur la base des signaux radio (BS), pour déterminer lesquelles des unités d'émission (BTX) présentent une proximité physique suffisante avec le dispositif de mesure de gaz et fournir les identifiants des unités d'émission suffisamment proches par l'intermédiaire de la première unité d'émission radio (FM1)
dans lequel le dispositif de mesure de gaz (V) présente en outre une unité d'enregistrement audio (MI) et/ou une unité d'enregistrement d'images (KA), et
dans lequel l'unité de commande (K) est en outre conçue pour collecter, lorsqu'elle se trouve dans le second état de fonctionnement (BZ2) et par rapport à un environnement physique du dispositif de mesure de gaz, des données audio à l'aide de l'unité d'enregistrement audio (MI) et/ou des données d'image à l'aide de l'unité d'enregistrement d'images (KA) et pour les fournir, par l'intermédiaire de la seconde unité d'émission radio (FM2), en tant qu'informations supplémentaires par rapport aux identifiants des unités d'émission.

2. Dispositif de mesure de gaz selon la revendication 1,
dans lequel les signaux radio (BS) respectifs indiquent des puissances d'émission respectives auxquelles les signaux radio (BS) respectifs ont été émis,
et dans lequel l'unité de commande (K) est en outre conçue pour déterminer, sur la base des puissances d'émission indiquées, lesquelles des unités d'émission (BTX) présentent une proximité physique suffisante avec le dispositif de mesure de gaz.

3. Dispositif de mesure de gaz selon l'une des revendications précédentes,
dans lequel l'unité de commande (K) est en outre conçue
- pour détecter à une première vitesse de détection, à l'aide de l'unité de réception radio (BM) et dans un premier état de fonctionnement (BZ1), un ou plusieurs signaux radio (BS), lesquels indiquent des identifiants respectifs d'unités d'émission (BTX) portatives,
- et pour détecter à une seconde vitesse de détection, à l'aide de l'unité de réception radio (BM) et dans un second état de fonctionnement (BZ2), un ou plusieurs signaux radio (BS), lesquels indiquent des identifiants respectifs d'unités d'émission (BTX) portatives,
dans lequel la seconde vitesse de détection est supérieure à la première vitesse de détection.

4. Dispositif de mesure de gaz selon l'une des revendications précédentes, présentant en outre un module de données (DM) destiné à recevoir des messages de données,
dans lequel l'unité de commande (K) est en outre conçue
- pour recevoir, à l'aide du module de données, un ou plusieurs messages de données, lesquels indiquent des données de capteur supplémentaires d'un module de capteur de gaz (ES) externe supplémentaire, et pour détecter le potentiel état de danger sur la base des données de capteur supplémentaires, et/ou
- pour recevoir, à l'aide du module de données (DM), au moins un message d'alerte (DS1) qui indique la présence éventuelle d'un état de danger, et pour détecter le potentiel état de danger sur la base du message d'alerte (DS1), et/ou
- pour recevoir, dans le second état de fonctionnement (BZ2) et à l'aide du module de données (DM), un message d'accusé de réception (QN), et pour mettre fin au second état de fonctionnement (BZ2) en cas d'existence du message d'accusé de réception (QN).

5. Dispositif de mesure de gaz selon l'une des revendications précédentes, présentant en outre une interface (I5) avec une unité d'enregistrement audio (MI),
dans lequel l'unité de commande (K) est en outre conçue
- pour collecter des données audio à l'aide de l'interface (I5),
- pour détecter, sur la base des données audio, une existence d'un signal acoustique prédéterminé
- et pour détecter, en cas d'existence du signal acoustique prédéterminé, le potentiel état de danger.

6. Dispositif de mesure de gaz selon l'une des revendications précédentes, présentant en outre une unité d'entrée (EE) destinée à recevoir une entrée d'utilisateur prédéterminée,
dans lequel l'unité de commande (K) est en outre conçue, dans le second état de fonctionnement (BZ2), pour mettre fin au second état de fonctionnement (BZ2) en présence de l'entrée d'utilisateur prédéterminée.
